Europäisches Patentamt

European Patent Office

Office européen des brevets

(19)

(11) Publication number: **0 074 706**
**B1**

(12) **EUROPEAN PATENT SPECIFICATION**

(45) Date of publication of patent specification: **04.03.87**

(51) Int. Cl.⁴: **G 01 F 5/00, F 16 B 45/04**

(21) Application number: **82303542.3**

(22) Date of filing: **06.07.82**

(54) **Disconnectable connector.**

(30) Priority: **06.07.81 US 280702**

(43) Date of publication of application:
**23.03.83 Bulletin 83/12**

(45) Publication of the grant of the patent:
**04.03.87 Bulletin 87/10**

(84) Designated Contracting States:
**DE FR GB IT**

(56) References cited:
**EP-A-0 012 005**
**FR-A- 778 354**
**GB-A- 657 652**
**US-A-1 847 166**

(73) Proprietor: **Tech/Ops, Inc.**
**One Beacon Street**
**Boston Massachusetts 02108 (US)**

(72) Inventor: **Munro III, John Joseph**
**105 Middlesex Street**
**North Andover Massachusetts (US)**

(74) Representative: **Coleman, Stanley et al**
**MATHYS & SQUIRE 10 Fleet Street**
**London EC4Y 1AY (GB)**

Courier Press, Leamington Spa, England.

EP 0 074 706 B1

## Description

This invention is related to systems for handling and manipulating an encapsulated quantity of radioactive material, wherein the capsule containing the radioactive material is stored in a radiation-shielding component of the system and, in use, the capsule is moved under control of a linearly substantially inextensible transversely flexible operator (e.g.: a flexible cable) from that component via a guide tube or the like to a remote position where its radiation is put to use. A typical system is illustrated and described in U.S. Patents No. 4,211,928 and No. 4,225,790. Such systems generally incorporate in the flexible operator a disconnectable connector device made of two parts for use in exchanging the capsule containing the radioactive material when the latter is spent, or when it is desired to use a different radioactive material in a given system. Examples of connector devices are shown and described in U.S. Patents No. 2,816,341 and No. 3,237,977. This invention is more particularly directed to improvements in such two-part connector devices.

A basic requirement in connector devices intended for use in systems for manipulating a quantity of radioactive material is that they be reliable and safe under all conceivable conditions that could be encountered in their use and transportation and in the operation of systems in which they may be incorporated. Connection and disconnection must be able to be made positively and, when made, must remain made under all such conditions. Since a capsule of radioactive material will be removed by means of a linearly substantially inextensible flexible operator through a flexible guide tube from a stored position to a "use" position, and back again, the connector should be able to follow bends and twists in the guide tube in order to minimize chances of becoming stuck in a sharp turn in the guide tube. Assuming the connector has ability to bend around curves in the guide tube, it should not become disconnected when bent to an extreme angle as might occur should the capsule and connector emerge from the guide tube. At the same time the connector should be rugged in construction and simple to use.

In general two types of connectors have up to now been used in systems of the type described above. One type uses a ball-and-socket configuration in which a first part or component of the connector (male) has a ball at one end and a second component (female) has a socket for receiving and retaining the ball. U.S. Patent No. 3,237,977 shows one example of that type in which a spring-load latch is used to hold the ball locked into the socket when the two components are connected together. The connector of that patent satisfies the requirements of safety and utility which are mentioned above; however, it has limited ability to follow sharp turns in the guide tube, or inside the storage unit.

Another ball-and-socket type connector that is in use has a side slot connecting with the socket in the female member, and the male member is engaged by sliding the neck on which the ball is supported into the slot while the two components are at a right-angle one to the other, and then turning the male member in the socket so that the two components are aligned extending away from the ball-and-socket joint. That connector is simple in design, and can flex up to 90 degrees in one plane which embraces the female member, but it can easily fall apart when it emerges from constraint of the guide system and is flexed to the 90-degree angle, at which connection and disconnection are normally made.

A second type of connector makes use of a hole in one component and a hook in the other, arranged so that the parts or components can be connected and disconnected while being held at an angle (e.g.: 90 degrees) one to the other. In one example of this latter type of connector, a first component has a flat hook while the second component resembles a clevis with its pin permanently in place. The pin has a rectangular cross section, such that the hook can engage it, or be disengaged from it, only if the two components are at an angle of 90 degrees one to the other. Upon being engaged at that angle, the two components can be straightened and will then remain connected together with freedom to swivel in only one plane to range of angles approximating 180 degrees. However, in the extreme angle at which disassembly is possible, this connector can accidentally become disconnected.

Another connector of the second type has a flat extension on one component with a uniquely-shaped hole in it, and a dog-leg pin extending from the other component for mating with that hole. This connector is connected and disconnected when the components are held at a right angle in a first plane while one ocmponent is moved around the axis of the other in a second plane that is perpendicular to the first plane. When assembled, this connector can swivel through about 180 degrees in only the first plane. Any attempt to swivel it in the second plane will fail except when the components are in that extreme positional angle in the first plane in which disassembly is possible, and then it can accidentally disconnect.

Thus, like the ball and socket connector described immediately above, it is possible for these connectors of the second type to fall apart under circumstances that might be encountered during use of the systems in which they are incorporated. This weakness is built into the design; it is a weakness in principle.

A disconnectible connector, according to the present invention comprises a first component having an enclosed loop disposed on a first end thereof, a second component having a hook disposed on a first end thereof, said hook being adapted to engage said loop on said first component, and a latch disposed on said first end of said second component, said latch having a movable closure element biassed into a normally closed position against said end of said hook to span the space between said first end of said second component and a free end of said hook and manual release means disposed in a slot in the side of said body of said second component for permitting manual retraction of said closure element into an open position to allow said loop to pass between said free end of said hook and said first end of said second component, said hook and said loop being securable to one another to permit said first component and said second component to be attached to one another in an end-to-end relationship, said first component and said second component being rotatable with respect to one another while mutually secured about a first axis generally parallel to the planes containing respectively said hook and said loop and being pivotable with respect to one another while mutually secured through an angle of at least 180 degrees about a second axis in a plane normal to said first axis, characterised in that said first and second components each have an elongated cylindrical body of the same diameter, said loop having a transverse extent equal to the diameter of said elongated body of said first component and said hook having a transverse extent equal to the diameter of said elongated body of said second component whereby said connector is adapted for moving a capsule containing a quantity of radioactive material from one location to another through a guide tube by means of a linearly substantially inextensible transversely flexible operator.

Brief Description of the Drawings
FIG. 1 is a longitudinal section thorugh a first component of the connector having a closed substantially rigid loop at one end;

FIG. 2 is a longitudinal section through a second component of the connector having a substantially rigid hook at one end with an operating and a retractable latch across the opening;

FIG. 3 is a side view of the component of Figure 1;

FIG. 4 is an end view taken on line IV—IV of Figure 3;

FIG. 5 is a longitudinal section through the principal body of the second component shown in Figure 2 to which the hook is affixed;

FIG. 6 is a transverse section taken on line VI—VI of Figure 5;

FIG. 7 is a side view taken on line VII—VII of Figure 5;

FIG. 8 is a side view taken on line VIII—VIII of Figure 7;

FIG. 9 is a longitudinal section through the latch member of the second component shown in Figure 2;

FIG. 10 is an end view taken on line X—X of Figure 9;

FIG. 11 is an end view taken on line XI—XI of Figure 9;

FIG. 12 shows the two components of the connector separated, in a posture ready to be connected one to the other;

FIG. 13 shows the connector assembled with the first component swivelled about 90 degrees relative to the second component in a first plane containing the second component; and

FIG. 14 shows the connector assembled with the first component swivelled about 60 degrees relative to the second component in a second plane coating the second component; to illustrate this, the second component has been rotated around its longitudinal axis approximately one-quarter turn in Figure 14, as compared with Figure 13.

Detailed Description of the Drawings
The first component 10 of the connector is a rigid tubular body 12 open at one end 14 to receive an end of a flexible cable 16, and closed at the other end 17 to which a rigid eye 18 is fixed. The inner surface 20 of the eye is preferably rounded, as shown. The eye 18 and body 12 can be made of one piece of suitable metal, for example 4130 steel.

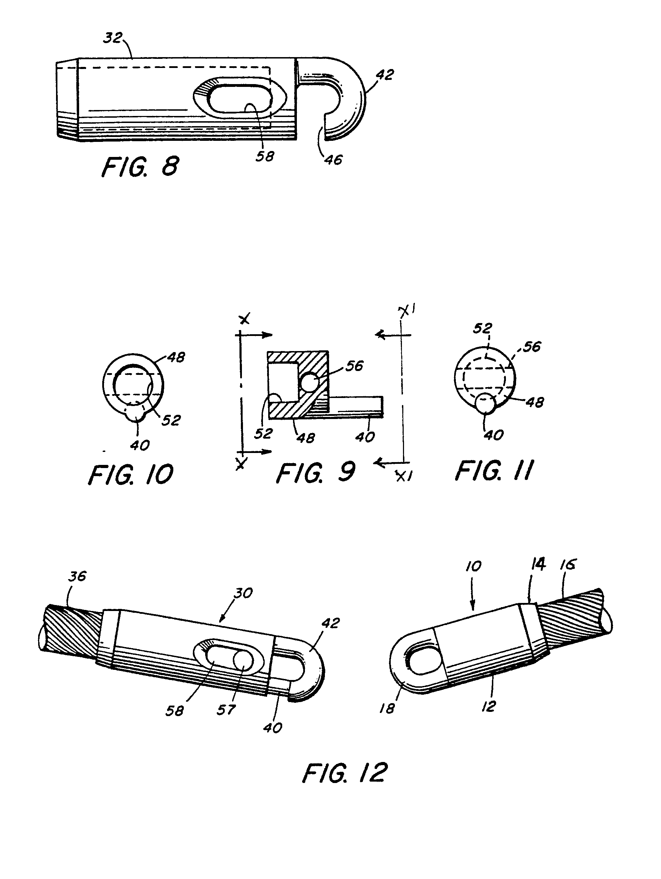

The second component 30 of the connector has a principal generally tubular body 32 the bore 33 of which is open at one end 34 to receive an end of a flexible cable 36, and closed at the other end 37 but for a hole 38 provided for the passage of a latch member 40. A hook 42 is fixed at one end 44 to the closed end 37, and has an opening 46 at the other end for coupling with the eye 18 of the first component 10. The latch component 40 has a base 48 which fits slidingly within the bore 33 in the principal body and holds a spring 50 in a recess 52. The spring bears on the end 54 of the cable 36 which resides within the principal body, and biases the latch component 40 to a closed position in which it substantially bridges the opening 46 of the hook. A transverse bore 56 is the base 48 serves to hold a finger-catch 57 (see Figure 12) which is acessible via a slot 58 through a sidewall of the principal body 32 (see Figure 8) for retracting the latch component 40 from the opening 46. The inner surface of the hook is rounded, as is shown in Figure 5 and Figure 8.

The latch component 40 is a rigid bar fixed to the closed end of the base 48. This bar is off-set slightly from the base (Figs. 9—11), and an off-set groove 62 is provided running longitudinally inside the bore 33 of the principal body 32, for fitting the latch member 40 and its base 48 into the principal body.

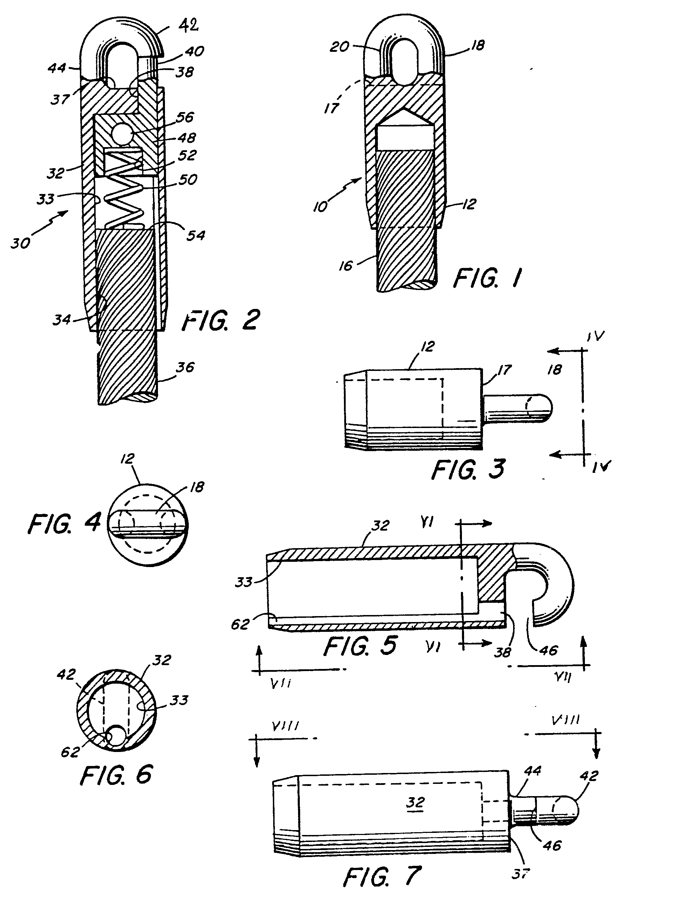

Figure 12 shows the two components 10 and 30 separated but juxtaposed as if ready to be connected together. To connect them, the latch member 40 is retracted by pulling the finger-catch 57 toward the end of the slot 58 nearer to the cable 36. The eye 18 is then passed through the opening 46 and the latch is released, to close the opening under bias-force from the spring 50 (Figure 2). Thus, it is seen that the connector of the invention will not accidentally part once the two components have been joined together.

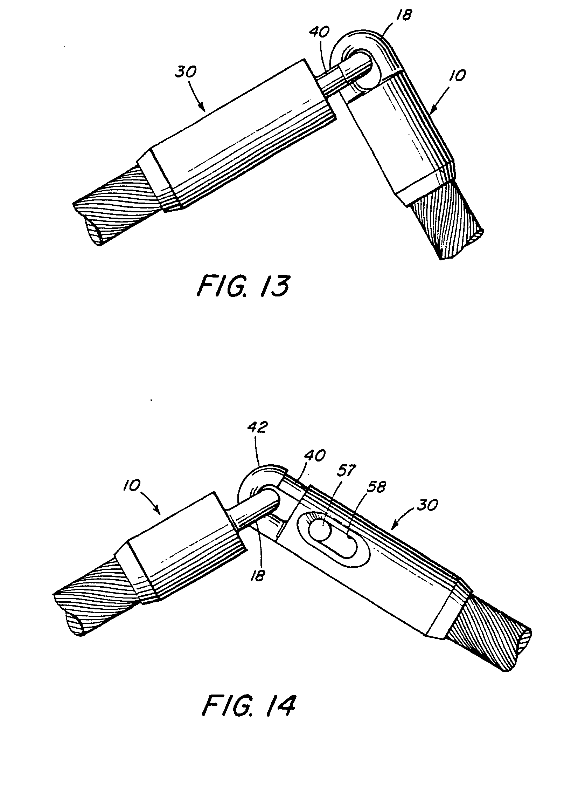

Referring to Figures 13 and 14, the second component 30 is shown lying in a first plane (i.e.: the plane of the paper) in which the latch member 40 is upper-most toward the viewer. The first component 10 has its eye 18 in the same plane. The first component is easily swivelled 90 degrees to either side of the second component in this first plane, being shown 90 degrees to one side of the second component in Figure 13. Thus, the first component is free to swivel through a range of angles up to at least 180 degrees relative to the second component in the first plane; and, clearly, the same is true of the second component relative to the first component.

In Figure 14 the second component 30 is rotated about one-quarter turn around its longitudinal axis, so that the finger catch 57 and slot 58 are uppermost toward the viewer. The plane referred on Figure 13 is now perpendicular to the paper, and the paper on which Figure 14 appears lies in a second plane which embraces the second component. The first component 10 can swivel around the second component in this second plane as easily as it did in the first plane, and with equal freedom; the first component is shown swivelled about 60 degrees to one side of the second component in Figure 14.

From the two exemplary positions illustrated and described in Figures 13 and 14, it is clear that the two members of the connector of the present invention have freedom when connected together for either one of said members to swivel through a range of angles up to at least 180 degrees relative to the other of said members in substantially any plane which includes said other member. The rounded surfaces (20) provided on the inner faces of the eye 18 and the hook 42, respectively, are provided to extend this range of angular freedom. The connector of this invention can therefore easily follow sharp bends in a guide tube, including a series of sharp bends which change direction from one bend to the next. Notwithstanding this wide-ranging freedom to swivel, the connector of this invention will not accidentally part when in an extreme swivel-angle position. It will be seen that the diameters of the tubular bodies 12 and 32 are equal and are respectively equal to the overall transverse dimensions of the eye 18 and hook 42, these features facilitating impeded movement of the connector within its guide tube.

## Claims

1. A disconenctable connector comprising a first component (10) having an enclosed loop (18) disposed on a first end (17) thereof, a second component (30) having a hook (42) disposed on a first end (37) thereof, said hook being adapted to engage said loop on said first component, and a latch (40) disposed on said first end of said second component, said latch having a movable closure element (48) biased into a normally closed position against said end of said hook to span the space between said first end of said second component and a free end of said hook and manual release means (57) disposed in a slot (58) in the side of said body of said second component for permitting manual retraction of said closure element into an open position to allow said loop to pass between said free end of said hook and said first end of said second component, said hook and said loop being securable to one another to permit said first component and said second component to be attached to one another in an end-to-end relationship, said first component and said second component being rotatable with respect to one another while mutually secured about a first axis generally parallel to the planes containing respectively said hook and said loop and being pivotable with respect to one another while mutually secured through an angle of at least 180 degrees about a second axis in a plane normal to said first axis, characterised in that said first and second components each have an elongated cylindrical body (12, 33) of the same diameter, said loop having a transverse extent equal to the diameter of said elongated body of said first component and said hook having a transverse extent equal to the diameter of said elongated body of said second component whereby said connector is adapted for moving a capsule containing a quantity of radioactive material from one location to another through a guide tube by means of a linearly substantially inextensible transversely flexible operator.

2. Connector means as claimed in Claim 1, characterised in that said manual release means (57) do not project outwardly beyond the side of the cylindrical body (32) of the second component.

3. Connector means as claimed in Claim 1 or Claim 2, characterised in that said second component body and said first component body each have a cross-sectional shape and size substantially the same as the interior cross-sectional size and shape of the guide tube.

4. Connector means as claimed in any preceding claim, characterised in that the elongated body (32) of the second component (30) is hollow and the movable closure element of the latch means extends from and is offset with respect to the axis of a cylindrical base (48) which telescopically engages within the hollow body of the second component.

5. Connector means as claimed in Claim 4, characterised in that the second component body is closed at the end (37) thereof to which the hook is affixed except for a hole (38) within which said movable closure member extends.

6. Connector means as claimed in Claim 5, characterised in that manual release means (57) extend from said cylindrical base (48) within the slot (58) in the side of the cylindrical body of the second component.

7. Connector means as claimed in Claim 1, characterised in that at least one of said components is fixed at its other end to an end of said linearly substantially inextensible transversely flexible operator.

8. Connector means as claimed in any one of Claims 4 to 6, characterised in that the end of the cylindrical body of the second component is open and one end (36) of said substantially inextensible operator is fixed therein.

9. Connector means as claimed in any preceding claim, characterised in that the first component body is open at the end thereof remote from said loop and one end (16) of said substantially inextensible operating member is fixed therein.

**Patentansprüche**

1. Entkuppelbares Verbindungsstück, mit einem ersten Bauteil (10), das eine an einem betreffenden ersten Ende (17) angeordnete geschlossene Öse (18) hat, einem zweiten Bauteil (30), das einen an einem betreffenden ersten Ende (37) angeordneten Haken (42) hat, der in die Öse an dem ersten Bauteil eingreifen kann, und einem an dem ersten Ende des zweiten Bauteils angeordneten Riegel (40), der ein bewegliches Schließelement (48) hat, das gegen das Ende des Hakens in eine normale Schließstellung vorgespannt ist, um den Raum zwischen dem ersten Ende des zweiten Bauteils und einem freien Ende des Hakens zu überbrücken, und der ein manuelles Freigabemittel (57) hat, das in einem Schlitz (58) in der Seite des Körpers des zweiten Bauteils angeordnet ist, um das Schließelement von Hand in eine offene Position zurückziehen zu können und die Öse zwischen dem freien Ende des Hakens und dem ersten Ende des zweiten Bauteils passieren zu lassen, wobei der Haken und die Öse wechselseitig sicherbar sind, um das erste Bauteil und das zweite Bauteil in einer endweisen Beziehung zueinander wechselseitig befestigen zu können, und wobei das erste Bauteil und das zweite Bauteil während der wechselseitigen Sicherung in bezug zueinander um eine erste Achse drehbar sind, die im wesentlichen parallel zu den Ebenen verläuft, welche den Haken und die Öse enthalten, sowie in bezug aufeinander während der wechselseitigen Sicherung über einen Winkel von wenigstens 180 Grad um eine zweite Achse in einer zu der ersten Achse senkrechten Ebene schwecnkbar sind, dadurch gekennzeichnet, daß das erste und das zweite Bauteil jeweils einen länglichen zylindrischen Körper (12, 33) mit dem gleichen Durchmesser haben, daß die Öse eine mit dem Durchmesser des länglichen Korpers des ersten Bauteils gleiche Querabmessung hat, und daß der Haken eine mit dem Durchmesser des länglichen Körpers des zweiten bauteils gleiche Querabmessung hat, wodurch das Verbindungsstück zum Bewegen einer Kapsel geeignet ist, die eine Menge eines radioaktiven Materials enthält und mittels eines linear im wesentlichen unausdehnbaren, in Querrichtung flexiblen Operators durch ein Führungsrohr hindurch von einem Ort zu einem anderen Ort zu bewegen ist.

2. Verbindungsstück nach Anspruch 1, dadurch gekennzeichnet, daß das manuelle Freigabemittel (57) nach außen nicht über die Seite des zylindrischen Körpers (32) des zweiten Bauteils vorsteht.

3. Verbindungsstück nach Anspruch 1 oder 2, dadurch gekennzeichnet, daß der zweite Bauteilkörper und der erste Bauteilkörper jeweils eine Querschnittsform und Größe im wesentlichen gleich der inneren Querschnittsgröße und Form des Führungsrohres haben.

4. Verbindungsstück nach einem der vorhergehenden Ansprüche, dadurch gekennzeichnet, daß der längliche Körper (32) des zweiten Bauteils (30) hohl ist und daß sich das bewegliche Schließelement des Riegels von der Achse einer zylindrischen Basis (48), die teleskopisch in den hohlen Körper des zweiten Bauteils eingreift, erstreckt und zu ihr versetzt ist.

5. Verbindungsstück nach Anspruch 4, dadurch gekennzeichnet, daß der zweite Bauteilkörper an dem betreffenden Ende (37) geschlossen ist, an welchem der Haken befestigt ist, mit Ausnahme eines Loches (38), innerhalb welchem sich das bewegliche schließelement erstreckt.

6. Verbindungsstück nach Anspruch 5, dadurch gekennzeichnet, daß sich das manuelle Freigabemittel (57) von der zylindrischen Basis (48) innerhalb des Schlitzes (58) in der Seite des zylindrischen Körpers des zweiten Bauteils erstreckt.

7. Verbindungsstück nach Anspruch 1, dadurch gekennzeichnet, daß wenigstens eines der Bauteile an seinem anderen Ende an einem Ende des linear im wesentlichen unausdehnbaren, in Querrichtung flexiblen Operators befestigt ist.

8. Verbindungsstück nach einem der Ansprüche 4 bis 6, dadurch gekennzeichnet, daß das Ende des zylindrischen Körpers des zweiten Bauteils offen ist und ein Ende (36) des im wesentlichen unausdehnbaren Operators darin befestigt ist.

9. Verbindungsstück nach einem der vorhergehenden Ansprüche, dadurch gekennzeichnet, daß der erste Bauteilkörper an seinem zu der Öse abgewandten Ende offen ist und ein ende (16) des im wesentlichen unausdehnbaren Operators darin befestigt ist.

**Revendications**

1. Dispositif de liaison détachable comprenant un premier composant (10) muni d'une boucle fermée (18) disposée à une première extrémité (17) de celui-ci, un deuxième composant (30) muni d'un crochet (42) disposé à une première extrémité (37) de celui-ci, ledit crochet étant agencé de manière à s'engager dans ladite boucle dudit premier composant, et un verrou (40) disposé à ladite première extrémité dudit deuxième composant, ledit verrou possédant un élément mobile de fermeture (48) sollicité vers une position normalement formée contre ladite extrémité dudit crochet de manière à enjamber l'intervalle entre ladite première extrémité dudit deuxième composant et une extrémité libre dudit crochet, et des moyens manuels de libération (57) disposés dans une ouverture (58) ménagée dans le côté dudit corps dudit deuxième composant pour permettre la rétraction manuelle dudit élément de fermeture à une position d'ouverture en vue de permettre à ladite boucle de passer entre ladite extrémité libre dudit crochet et ladite première extrémité dudit deuxième composant, ledit crochet et ladite boucle étant agencés de manière à pouvoir être fixés l'un à l'autre pour permettre audit premier composant et audit deuxième composant d'être attachés l'un à l'autre bout à bout, ledit premier composant et ledit deuxième composant pouvant tourner l'un par rapport à l'autre, tout en étant fixés mutuellement, autour d'un premier axe sensiblement parallèle aux plans contenant respectivement ledit crochet et ladite boucle et pouvant pivoter l'un par rapport à l'autre, tout en étant fixés mutuellement, d'un angle de 180° au moins autour d'un deuxième axe dans un plan normal audit premier axe, caractérisé en ce que lesdits premier et deuxième composants possèdent chacun un corps cylindrique allongé (12, 32) de même diamètre, ladite boucle ayant une dimension transversale égale au diamètre dudit corps allongé dudit premier composant et ledit crochet ayant une dimension transversale égale au diamètre dudit corps allongé dudit deuxième composant, ledit dispositif de liaison étant agencé de manière à déplacer une capsule contenant une certaine quantité de matière radioactive d'un emplacement à un autre dans un tube de guidage, à l'aide d'un actionneur flexible transversalement et pratiquement inextensible linéairement.

2. Moyen de liaison selon la revendication 1, caractérisé en ce que lesdits moyens manuels de libération (57) ne dépassent pas vers l'extérieur le côté du corps cylindrique (32) du deuxième composant.

3. Moyen de liaison selon la revendication 1 ou la revendication 2, caractérisé en ce que ledit corps du deuxième composant et ledit corps du premier composant ont une forme et des dimensions en coupe transversale qui sont pratiquement les mêmes que la forme et les dimensions intérieures du tube de guidage en coupe transversale.

4. Moyen de liaison selon l'une quelconque des revendications précédentes, caractérisé en ce que le corps allongé (32) du deuxième composant (30) est creux et que l'élément mobile de fermeture du moyen de verrouillage s'étend à partir de, et est décalé par rapport à, l'axe d'une embase cylindrique (48) qui s'engage télescopiquement dans le corps creux du deuxième composant.

5. Moyen de liaison selon la revendication 4, caractérisé en ce que le corps du deuxième composant est fermé à celle (37) des extrémités de celui-ci à laquelle le crochet est fixé, à l'exception d'un trou (38) dans lequel passe ledit élément mobile de fermeture.

6. Moyen de liaison selon la revendication 5, caractérisé en ce que lesdits moyens manuels de libération (57) s'étendent de ladite embase cylindrique (48) jusque dans l'ouverture (58) ménagée sur le côté du corps cylindrique du deuxième composant.

7. Moyen de liaison selon la revendication 1, caractérisé en ce que l'un au moins desdits composants est fixé, par son autre extrémité, à une extrémité dudit actionneur flexible transversalement et pratiquement inextensible linéairement.

8. Moyen de liaison selon l'une quelconque des revendications 4 à 6, caractérisé en ce que l'extrémité du corps cylindrique du deuxième composant est ouverte et que l'une (36) des extrémités dudit actionneur pratiquement inextensible est fixée dans cette extrémité.

9. Moyen de liaison selon l'une quelconque des revendications précédentes, caractérisé en ce que le corps du premier composant est ouvert à celle de ses extrémités qui est éloignée de ladite boucle et que l'une (16) des extrémités dudit actionneur pratiquement inextensible est fixée dans cette extrémité.

FIG. 2

FIG. 1

FIG. 3

FIG. 4

FIG. 5

FIG. 6

FIG. 7

FIG. 8

FIG. 10

FIG. 9

FIG. 11

FIG. 12

FIG. 13

FIG. 14

3